# EUROPEAN PATENT APPLICATION

(11) **EP 4 753 133 A1**
(43) Date of publication of application: **03.06.2026**
(21) Application number: 24846101.4
(22) Date of filing: 14.03.2024
(51) Int. Cl.: H02M 3/335, H02M 1/08, B60L 53/22

(54) **POWER CONVERSION DEVICE**

(30) Priority: 24.07.2023 KR 20230096157
(71) Applicant: LG Magna e-Powertrain Co., Ltd., Seo-gu, Incheon 22744 (KR)
(72) Inventor: JUNG, Youngjin, Seo-gu, Incheon 22744 (KR); SOH, Jaehwan, Seo-gu, Incheon 22744 (KR); CHOI, Byunggi, Seo-gu, Incheon 22744 (KR); SHIN, Daeseong, Seo-gu, Incheon 22744 (KR); KIM, Dongmin, Daejeon 34141 (KR); MOON, Gunwoo, Daejeon 34141 (KR); CHOI, Dongmin, Daejeon 34141 (KR); CHAE, Jongyoon, Daejeon 34141 (KR)
(74) Representative: Vossius & Partner Patentanwälte Rechtsanwälte mbB
(86) International application number: PCT/KR2024/095499
(87) International publication number: WO 2025/023800

(57) **Abstract**

A power conversion device is disclosed. A power conversion device according to an embodiment of the present disclosure includes: a first capacitor connected to a first battery; a second capacitor connected to a second battery; a transformer; a first full bridge switching portion including a plurality of switching elements, and disposed between the first capacitor and an input side of the transformer; and a second full bridge switching portion including a plurality of switching elements, and disposed between the second capacitor and an output side of the transformer, and in a pre-charge mode, a turn-off timing of a partial switching element of the second full bridge switching portion is delayed during operations of the first full bridge switching portion and the second full bridge switching portion. Accordingly, the capacitor can be stably pre-charged.

## Description

### BACKGROUND

### 1. Field

The present disclosure relates to a power conversion device, and more particularly, to a power conversion device which can stably pre-charge a capacitor.

### 2. Description of the Related Art

Electric vehicles that has electricity as power, or hybrid vehicles that combine internal combustion engines and these, generate outputs thereof using motors and batteries.

Meanwhile, for driving a motor, an inverter that converts DC voltage to AC voltage is required, and the inverter converts the DC voltage of the battery to AC voltage.

Meanwhile, a capacitor is used at a front stage of the inverter, and the capacitor stores the DC voltage from the battery.

Meanwhile, at a start of operation of the power conversion device, an instantaneous inrush current flows from the battery to the capacitor. In this case, as a level of inrush current increases, a possibility of damage to the capacitor increases.

### SUMMARY

The present disclosure has been made in view of the above problems, and provides a power conversion device which can stably pre-charge a capacitor.

The present disclosure further provides a power conversion device which can prevent damage to the capacitor.

In order to achieve the technical object, in accordance with an aspect of the present disclosure, a power conversion device includes: a first capacitor connected to a first battery; a second capacitor connected to a second battery; a transformer; a first full bridge switching portion including a plurality of switching elements, and disposed between the first capacitor and an input side of the transformer; and a second full bridge switching portion including a plurality of switching elements, and disposed between the second capacitor and an output side of the transformer, and in a pre-charge mode, a turn-off timing of a partial switching element of the second full bridge switching portion is delayed during operations of the first full bridge switching portion and the second full bridge switching portion.

Meanwhile, in the pre-charge mode, the turn-off timing of the partial switching element of the second full bridge switching portion is delayed, and wherein a distance between the turn-off timing of the partial switching element of the second full bridge switching portion and a turn-off timing of the other partial switching element can be less than a distance between the turn-off timing of the partial switching element of the second full bridge switching portion and a turn-on timing of the other partial switching element.

Meanwhile, in the pre-charge mode, during a turn-off delay interval in which the turn-off timing of the partial switching element of the second full bridge switching portion is delayed, the other partial switching element of the second full bridge switching portion can be turned on, and the switching elements in the first full bridge switching portion can be turned on.

Meanwhile, after the turn-off delay interval, the partial switching element of the second full bridge switching portion can be turned off, and during a turn-off delay interval in which the partial switching element of the second full bridge switching portion is turned off, the other partial switching element of the second full bridge switching portion can be turned on, and the switching elements in the first full bridge switching portion can be turned on.

Meanwhile, after the turn-off interval, during a turn-on interval in which another partial switching element of the second full bridge switching portion is turned on, the other partial switching element of the second full bridge switching portion can be turned on, and the switching elements in the first full bridge switching portion can be turned on.

Meanwhile, after the turn-on interval, the another partial switching element of the second full bridge switching portion can be maintained to be turned on, the other partial switching element of the second full bridge switching portion can be turned off, a partial switching element in the first full bridge switching portion can be turned off, and the other partial switching element in the first full bridge switching portion can be turned on.

Meanwhile, the power conversion device according to the embodiment of the present disclosure can further include a controller configured to control the first full bridge switching portion and the second full bridge switching portion.

Meanwhile, in the pre-charge mode, during the operations of the first full bridge switching portion and the second full bridge switching portion, the controller can be configured to delay the turn-off timing of the partial switching element of the second full bridge switching portion.

Meanwhile, the controller can be configured to decrease the delay as a difference between a first battery voltage and a second battery voltage increases in the pre-charge mode.

Meanwhile, the controller can be configured to decrease the delay in response to increase of a voltage of the second capacitor in the pre-charge mode.

Meanwhile, the power conversion device according to the embodiment of the present disclosure can further include: an inductor connected between the first capacitor and the first full bridge switching portion; and a first current detector detecting a current flowing on the inductor, and the controller can be configured to decrease the delay in response to decrease of the current flowing on the inductor in the pre-charge mode.

Meanwhile, the power conversion device according to the embodiment of the present disclosure can further include: a second current detector disposed between the second full bridge switching portion and the second capacitor; and a third current detector disposed between the second capacitor and the second battery.

Meanwhile, the controller can be configured to flow a current from the first capacitor toward the second capacitor in the pre-charge mode, and flow the current from the second capacitor toward the first capacitor after termination of the pre-charge mode.

Meanwhile, the power conversion device according to the embodiment of the present disclosure can further include a battery switching element connected between the second capacitor and the second battery, and the controller can be configured to turn off the battery switching element in the pre-charge mode.

Meanwhile, the controller can be configured to turn on the battery switching element after the pre-charge mode.

Meanwhile, the power conversion device according to the embodiment of the present disclosure can further include an inverter connected to both terminals of the second capacitor, and the controller can be configured to store a voltage from the second battery in the second capacitor and control the inverter to operate based on the voltage stored in the second capacitor, after the pre-charge mode.

Meanwhile, the power conversion device according to the embodiment of the present disclosure can further include a converter configured to convert an input alternating current (AC) voltage into a direct current (DC) voltage, and the second battery can be disposed between the converter and the inverter.

Meanwhile, the first full bridge switching portion can include a first switching element and a second switching element corresponding to a first leg, which are connected to each other in series; and a third switching element and a fourth switching element corresponding to a second leg connected in parallel to the first leg, which are connected to each other in series.

Meanwhile, the second full bridge switching portion can include a fifth switching element and a sixth switching element corresponding to a third leg, which are connected to each other in series; and a seventh switching element and an eighth switching element corresponding to a fourth leg connected in parallel to the third leg, which are connected to each other in series.

Meanwhile, the second full bridge switching portion can further include a first diode element and a second diode element connected in parallel to the third leg and the fourth leg, which are connected to each other in series.

In accordance with another aspect of the present disclosure, a power conversion device includes: a first capacitor connected to a first battery; a second capacitor connected to a second battery; a transformer; a first full bridge switching portion including a plurality of switching elements, and disposed between the first capacitor and an input side of the transformer; and a second full bridge switching portion including a plurality of switching elements, and disposed between the second capacitor and an output side of the transformer, and in a pre-charge mode, a distance between a turn-off timing of a partial switching element of the second full bridge switching portion and a turn-off timing of the other switching element is less than a distance between the turn-off timing of the partial switching element of the second full bridge switching portion and a turn-on timing of the other partial switching element.

### EFFECTS OF THE DISCLOSURE

A power conversion device according to an embodiment of the present disclosure includes: a first capacitor connected to a first battery; a second capacitor connected to a second battery; a transformer; a first full bridge switching portion including a plurality of switching elements, and disposed between the first capacitor and an input side of the transformer; and a second full bridge switching portion including a plurality of switching elements, and disposed between the second capacitor and an output side of the transformer, and in a pre-charge mode, a turn-off timing of a partial switching element of the second full bridge switching portion is delayed during operations of the first full bridge switching portion and the second full bridge switching portion. Accordingly, the capacitor can be stably pre-charged. In particular, damage to the capacitor can be prevented.

Meanwhile, in the pre-charge mode, the turn-off timing of the partial switching element of the second full bridge switching portion is delayed, and wherein a distance between the turn-off timing of the partial switching element of the second full bridge switching portion and a turn-off timing of the other partial switching element can be less than a distance between the turn-off timing of the partial switching element of the second full bridge switching portion and a turn-on timing of the other partial switching elements. Accordingly, the capacitor can be stably pre-charged.

Meanwhile, in the pre-charge mode, during a turn-off delay interval in which the turn-off timing of the partial switching element of the second full bridge switching portion is delayed, the other partial switching element of the second full bridge switching portion can be turned on, and the switching elements in the first full bridge switching portion can be turned on. Accordingly, the capacitor can be stably pre-charged.

Meanwhile, after the turn-off delay interval, the partial switching element of the second full bridge switching portion can be turned off, and during a turn-off delay interval in which the partial switching element of the second full bridge switching portion is turned off, the other partial switching element of the second full bridge switching portion can be turned on, and the switching elements in the first full bridge switching portion can be turned on. Accordingly, the capacitor can be stably pre-charged.

Meanwhile, after the turn-off interval, during a turn-on interval in which another partial switching element of the second full bridge switching portion is turned on, the other partial switching element of the second full bridge switching portion can be turned on, and the switching elements in the first full bridge switching portion can be turned on. Accordingly, the capacitor can be stably pre-charged.

Meanwhile, after the turn-on interval, the another partial switching element of the second full bridge switching portion can be maintained to be turned on, the other partial switching element of the second full bridge switching portion can be turned off, a partial switching element in the first full bridge switching portion can be turned off, and the other partial switching element in the first full bridge switching portion can be turned on. Accordingly, the capacitor can be stably pre-charged.

Meanwhile, the power conversion device according to the embodiment of the present disclosure can further include a controller configured to control the first full bridge switching portion and the second full bridge switching portion. Accordingly, the capacitor can be stably pre-charged.

Meanwhile, in the pre-charge mode, during the operations of the first full bridge switching portion and the second full bridge switching portion, the controller can be configured to delay the turn-off timing of the partial switching element of the second full bridge switching portion. Accordingly, the capacitor can be stably pre-charged.

Meanwhile, the controller can be configured to decrease the delay as a difference between a first battery voltage and a second battery voltage increases in the pre-charge mode. Accordingly, the capacitor can be efficiently pre-charged.

Meanwhile, the controller can be configured to decrease the delay in response to increase of a voltage of the second capacitor in the pre-charge mode. Accordingly, the capacitor can be efficiently pre-charged.

Meanwhile, the power conversion device according to the embodiment of the present disclosure can further include: an inductor connected between the first capacitor and the first full bridge switching portion; and a first current detector detecting a current flowing on the inductor, and the controller can be configured to decrease the delay in response to decrease of the current flowing on the inductor in the pre-charge mode. Accordingly, the capacitor can be efficiently pre-charged.

Meanwhile, the power conversion device according to the embodiment of the present disclosure can further include: a second current detector disposed between the second full bridge switching portion and the second capacitor; and a third current detector disposed between the second capacitor and the second battery. Accordingly, the capacitor can be efficiently pre-charged.

Meanwhile, the controller can be configured to flow a current from the first capacitor toward the second capacitor in the pre-charge mode, and flow the current from the second capacitor toward the first capacitor after termination of the pre-charge mode. Accordingly, after the pre-charge mode, the first battery can be stably charged.

Meanwhile, the power conversion device according to the embodiment of the present disclosure can further include a battery switching element connected between the second capacitor and the second battery, and the controller can be configured to turn off the battery switching element in the pre-charge mode. Accordingly, the capacitor can be efficiently pre-charged.

Meanwhile, the controller can be configured to turn on the battery switching element after the pre-charge mode. Accordingly, after the pre-charge mode, the first battery can be stably charged.

Meanwhile, the power conversion device according to the embodiment of the present disclosure can further include an inverter connected to both terminals of the second capacitor, and the controller can be configured to store a voltage from the second battery in the second capacitor and control the inverter to operate based on the voltage stored in the second capacitor, after the pre-charge mode. Accordingly, a motor operation mode can be stably performed.

Meanwhile, the power conversion device according to the embodiment of the present disclosure can further include a converter configured to convert an input alternating current (AC) voltage into a direct current (DC) voltage, and the second battery can be disposed between the converter and the inverter. Accordingly, the second battery can be stably charged.

Meanwhile, the first full bridge switching portion can include a first switching element and a second switching element corresponding to a first leg, which are connected to each other in series; and a third switching element and a fourth switching element corresponding to a second leg connected in parallel to the first leg, which are connected to each other in series. Accordingly, power conversion can be efficiently performed.

Meanwhile, the second full bridge switching portion can include a fifth switching element and a sixth switching element corresponding to a third leg, which are connected to each other in series; and a seventh switching element and an eighth switching element corresponding to a fourth leg connected in parallel to the third leg, which are connected to each other in series. Accordingly, power conversion can be efficiently performed.

Meanwhile, the second full bridge switching portion can further include a first diode element and a second diode element connected in parallel to the third leg and the fourth leg, which are connected to each other in series. Accordingly, power conversion can be efficiently performed.

A power conversion according to another embodiment of the present disclosure includes: a first capacitor connected to a first battery; a second capacitor connected to a second battery; a transformer; a first full bridge switching portion including a plurality of switching elements, and disposed between the first capacitor and an input side of the transformer; and a second full bridge switching portion including a plurality of switching elements, and disposed between the second capacitor and an output side of the transformer, and in a pre-charge mode, a distance between a turn-off timing of a partial switching element of the second full bridge switching portion and a turn-off timing of the other switching element is less than a distance between the turn-off timing of the partial switching element of the second full bridge switching portion and a turn-on timing of the other partial switching element. Accordingly, the capacitor can be stably pre-charged. In particular, damage to the capacitor can be prevented.

### BRIEF DESCRIPTION OF THE DRAWINGS

FIG. 1 is a schematic view showing a vehicle body of a vehicle according to an embodiment of the present disclosure;
FIG. 2 is an example of a motor drive system according to an embodiment of the present disclosure;
FIG. 3 illustrates an example of an internal block diagram of a motor driving device of FIG. 2;
FIG. 4 is an example of an internal circuit diagram of the motor driving device of FIG. 3;
FIG. 5 is an example of an internal block diagram of an inverter controller of FIG. 4;
FIG. 6 is a diagram illustrating operations of a battery and an inverter related to the present disclosure;
FIG. 7 is a block diagram illustrating a power conversion device according to an embodiment of the present disclosure;
FIG. 8 is a diagram illustrating an example of an operation of the power conversion device of FIG. 7;
FIG. 9 is a diagram illustrating a dc/dc converter of FIG. 7; and
FIGS. 10A to 11F are diagrams referred to for description of an operation of FIG. 9.

### DETAILED DESCRIPTION OF THE PREFERRED EMBODIMENTS

Reference will now be made in detail to the preferred embodiments of the present disclosure, examples of which are illustrated in the accompanying drawings.

The suffixes "module" and "unit" in elements used in description below are given only in consideration of ease in preparation of the specification and do not have specific meanings or functions. Therefore, the suffixes "module" and "unit" can be used interchangeably.

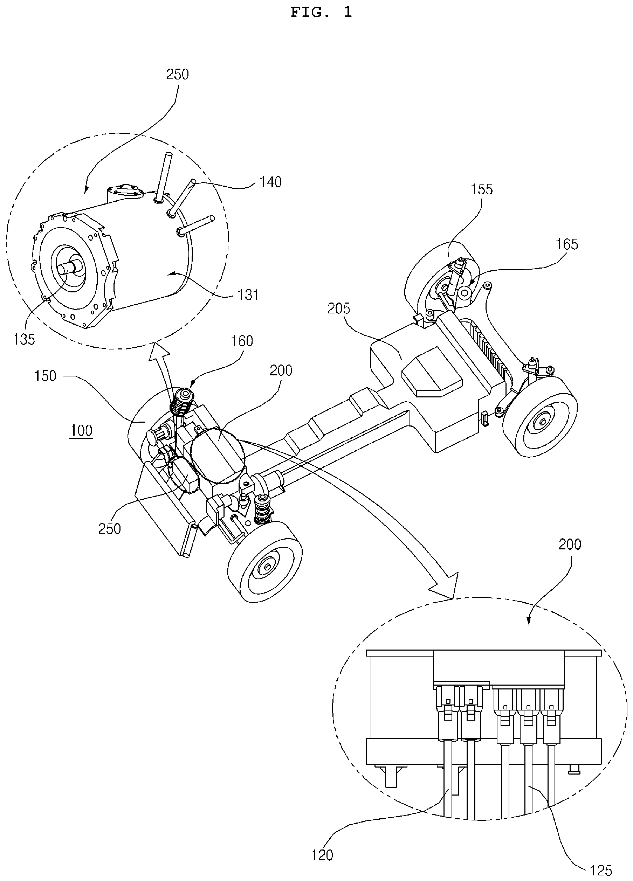

FIG. 1 is a schematic view showing a vehicle body of a vehicle according to an embodiment of the present disclosure.

Referring to the drawing, a vehicle 100 according to an embodiment of the present disclosure can include a battery 205 for supplying voltage, a motor driving device 200 that is supplied with voltage from the battery 205, a motor 250 that is driven and rotated by the motor driving device 200, a front wheel 150 and a rear wheel 155 that are rotated by the motor 250, a front wheel suspension device 160 and a rear wheel suspension device 165 that prevent the vibration due to the road surface from being transmitted to a vehicle body, an inclination angle detector 190 for detecting the inclination angle of the vehicle body. Meanwhile, a drive gear (not shown) for configured to convert the rotational speed of the motor 250 based on a gear ratio can be additionally provided.

The battery 205 is configured to supply voltage to the motor driving device 200. In particular, the DC voltage is supplied to a capacitor C in the motor driving device 200.

The battery 205 can be formed of a plurality of unit cells. The plurality of unit cells can be managed by a battery management system (BMS) to maintain a constant voltage, and can emit a constant voltage by the battery management system.

For example, the battery management system can detect the voltage Vbat of the battery 205, and transmit the detected voltage Vbat to an electronic controller (not shown) or an inverter controller 430 inside the motor driving device 200, can supply the DC voltage stored in a capacitor C in the motor driving device 200 to the battery when the battery voltage Vbat falls down to or below a lower limit. In addition, when the battery voltage Vbat rises up to or above an upper limit, DC voltage can be supplied to the capacitor C in the motor driving device 200.

The battery 205 is preferably configured as a secondary battery capable of charging and discharging, but is not limited thereto.

The motor driving device 200 receives DC voltage from the battery 205 via a voltage input cable 120. The motor driving device 200 converts the DC voltage received from the battery 205 into AC voltage and is configured to supply to the motor 250. The converted AC voltage is preferably a three-phase AC voltage. The motor driving device 200 is configured to supply three-phase AC voltage to the motor 250 through a three-phase output cable 125 provided in the motor driving device 200.

Although FIG. 1 shows that the motor driving device 200 has the three-phase output cable 125 composed of three cables, but three cables can be provided in a single cable.

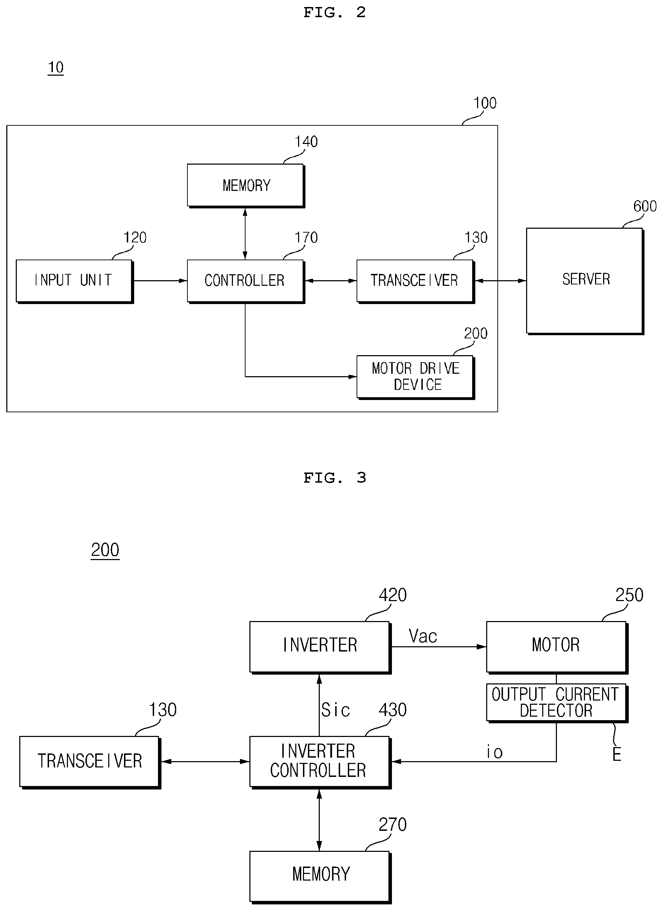

Meanwhile, the motor driving device 200 according to an embodiment of the present disclosure will be described later with reference to FIG. 3 and below.

The motor 250 includes a stator 131 that is fixed without rotation and a rotor 135 that rotates. The motor 250 is provided with an input cable 140 to receive AC voltage supplied from the motor driving device 200. The motor 250 can be, for example, a three-phase motor, and the rotation speed of the rotor can be varied based on the applied frequency, when a voltage variable/frequency variable each phase AC voltage is applied to the coil of the stator of each phase.

The motor 250 can be implemented in various forms such as an induction motor, a blushless DC motor (BLDC) motor, a reluctance motor, and the like.

Meanwhile, one side of the motor 250 can be provided with a drive gear (not shown). The drive gear converts the rotational energy of the motor 250 based on the gear ratio. The rotational energy output from the drive gear is transmitted to the front wheel 150 and/or the rear wheel 155 to move the vehicle 100.

The front wheel suspension device 160 and the rear wheel suspension device 165 support the front wheel 150 and the rear wheel 155 respectively with respect to the vehicle body. The vertical direction of the front wheel suspension device 160 and the rear wheel suspension device 165 is supported by a spring or a damping mechanism so that the vibration due to the road surface does not affect the vehicle body.

The front wheel 150 can be further provided with a steering device (not shown). The steering device is a device for adjusting the direction of the front wheel 150 in order to drive the vehicle 100 in a direction intended by the driver.

Meanwhile, although not shown in the drawing, the vehicle 100 can further include an electronic controller for controlling the overall electronic devices in the vehicle. The electronic controller (not shown) controls each device to perform an operation, display, and the like. In addition, the above-described battery management system can be controlled.

Further, the controller 170 of FIG. 2 can generate driving command values according to various driving modes (driving mode, reverse mode, neutral mode, parking mode, etc.) based on detection signals from an inclination angle detector (not illustrated) that detects an inclination angle of the vehicle 100, a speed detector (not illustrated) that detects a speed of the vehicle 100, a brake detector (not illustrated) according to an operation of a brake pedal, an accelerator detector (not illustrated) according to an operation of an accelerator pedal, etc. The driving command value at this time can be, for example, a torque command value.

Meanwhile, the vehicle 100 according to the embodiment of the present disclosure can include a hybrid electric vehicle using a battery and a motor while using an engine, as well as a pure electric vehicle using a battery and a motor.

In this case, the hybrid electric vehicle can further include a switching means capable of selecting at least one of a battery and an engine, and a transmission.

Meanwhile, the hybrid electric vehicle can be divided into a series method of driving the motor by configured to convert the mechanical energy output from the engine into electrical energy, a parallel method of using the mechanical energy output from the engine and the electrical energy from the battery at the same time, and a series-parallel method of mixing them.

FIG. 2 is an example of a motor drive system according to an embodiment of the present disclosure.

Referring to the drawing, the motor driving system according to an embodiment of the present disclosure can include a vehicle 100 and a server 500.

Here, the server 500 can be a server operated by the manufacturer of the motor driving device 200 or the vehicle 100, or can correspond to a mobile terminal of the driver of the motor driving device 200 or the vehicle 100.

Meanwhile, the vehicle 100 can include an input device 120, a transceiver 130, a memory 140, a controller 170, and a motor driving device 200.

The input device 120 can include an operation button, a key, and the like, and output an input signal for voltage on/off, operation setting, etc. of the vehicle 100.

The transceiver 130 can exchange data with an external device, for example, the server 500 by wire or wirelessly, or can exchange data wirelessly with a remote server, or the like. For example, the transceiver 130 can perform mobile communication such as 4G or 5G, infrared (IR) communication, RF communication, Bluetooth communication, Zigbee communication, WiFi communication, and the like.

Meanwhile, the memory 140 of the vehicle 100 can store data necessary for the operation of the vehicle 100. For example, the memory 140 can store data related to an operation time, an operation mode, and the like during operation of the motor driving device 200.

In addition, the memory 140 of the vehicle 100 can store management data including power consumption information of the vehicle, recommend driving information, current driving information, and management information.

In addition, the memory 140 of the vehicle 100 can store diagnostic data including operation information, driving information, and error information of the vehicle.

The controller 170 can control each unit in the vehicle 100. For example, the controller 170 can control the input device 120, the transceiver 130, the memory 140, the motor driving device 200, and the like.

The motor driving device 200 can be referred to as a motor driver, as a driver, to drive the motor 250.

Meanwhile, the motor driving device 200 can include an inverter 420 including a plurality of inverter switching elements and outputting AC voltage to the motor 250, an output current detector E configured to detect an output current (io) flowing on the motor 250, and an inverter controller 430 outputting a switching control signal to the inverter 420 based on current information id and iq, and a torque command value T* based on an output current io detected by the output current detector E.

Meanwhile, the current information (id, iq) based on the output current io and the torque command value T* can be transmitted to the external server 500, and can receive a current command value (i*d, i*q) from the server 500. The inverter controller 430 can output a switching control signal to the inverter 420, based on the current command value received from the transceiver 130.

Accordingly, the motor 250 can be driven based on the current command value corresponding to the maximum torque calculated in real time by the server 500. Thus, maximum torque drive of the motor 250 can be achieved.

Meanwhile, the transceiver 130 in the motor driving device 200 can transmit the current information (id, iq), the torque command value T*, and the voltage information related to the detected dc terminal voltage Vdc to the server 500. Accordingly, the maximum torque drive of the motor 250 under various conditions can be achieved.

Meanwhile, the detailed operation of the motor driving device 200 is described with reference to FIG. 3.

FIG. 3 illustrates an example of an internal block diagram of a motor driving device of FIG. 2.

Referring to the drawing, the motor driving device 200 according to the embodiment of the present disclosure is a drive device for driving the motor 250, and can include an inverter 420 which has a plurality of inverter switching elements (Sa ~ Sc, S'a ~ S'c) and outputs AC voltage to the motor 250, and an inverter controller 430 for controlling the inverter 420. Further, it can include a memory 270 that provides various stored data to the inverter controller 430.

Meanwhile, the motor driving device 200 according to the embodiment of the present disclosure can further include a capacitor C that stores a dc-terminal voltage Vdc corresponding to an input terminal of the inverter 420, a dc-terminal voltage detector B that detects the dc-terminal voltage Vdc, an output current detector E that detects the output current flowing on the motor 250, and a position detection sensor 105.

According to the embodiment of the present disclosure, the motor 250 can be a three-phase motor driven by the inverter 420.

Meanwhile, the inverter controller 430 can output the switching control signal Sic to the inverter 420, based on the current command value (i*d, i*q) corresponding to the calculated maximum torque. Accordingly, maximum torque driving of the motor 250 can be achieved.

The inverter controller 430 according to the embodiment of the present disclosure calculates the current information (id, iq) and the torque command value T* in real time, calculates the current command value (i*d, i*q) based on the torque command value T*, and drives the motor 250 using the current command values (i*d, i*q). Accordingly, the accuracy for high efficiency driving is improved.

Meanwhile, the motor driving device 200 can further include a capacitor C for storing the dc terminal voltage Vdc, corresponding to an input terminal of the inverter 420, and a dc terminal voltage detector (B) for detecting the dc terminal voltage Vdc.

The inverter controller 430 calculates the current command value (i*d, i*q), based on the current information id, iq, the torque command value T*, and the detected dc terminal voltage Vdc, and drives the motor 250 by using the current command value i*d and i*q. Accordingly, the accuracy for high efficiency driving is improved.

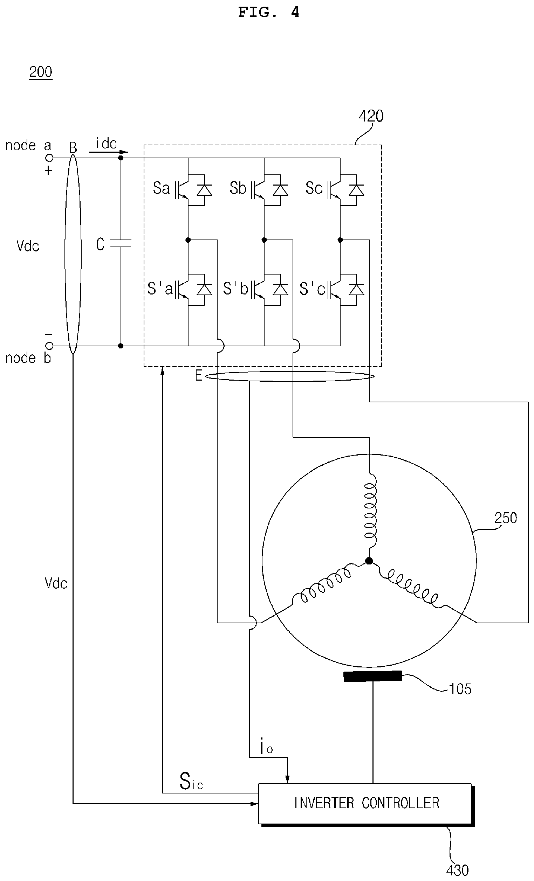

FIG. 4 is an example of an internal circuit diagram of the motor driving device of FIG. 3.

Referring to the drawing, the motor driving device 200 according to an embodiment of the present disclosure can include the inverter 420, the inverter controller 430, the output current detector E, the dc terminal voltage detector Vdc, and a position detection sensor 105.

Meanwhile, since the motor driving device 200 converts electric power to drive the motor, it can be referred to as a power configured to convert device.

The dc terminal capacitor C stores the voltage input to the dc terminal (a-b terminal). In the drawing, a single device is exemplified as the dc terminal capacitor C, but a plurality of devices can be provided to ensure device stability.

Meanwhile, the input voltage supplied to the dc terminal capacitor C can be a voltage stored in the battery 205 or a voltage that is level-converted by a converter (not shown) .

Meanwhile, since both ends of the dc terminal capacitor C store the DC voltage, these can be referred to as a dc terminal or a dc link terminal.

The dc terminal voltage detector B can detect the voltage Vdc of the dc terminal that is both ends of the dc terminal capacitor C. To this end, the dc terminal voltage detector B can include a resistor, an amplifier, and the like. The detected dc terminal voltage Vdc, as a discrete signal in the form of a pulse, can be input to the inverter controller 430.

The inverter 420 can include a plurality of inverter switching elements (Sa ~ Sc, S'a ~ S'c), and the turning on/off operation of the switching element (Sa ~ Sc, S'a ~ S'c) can convert the DC voltage Vdc into three-phase AC voltage Va, Vb, Vc having a certain frequency and output to the three-phase synchronous motor 250.

In the inverter 420, the upper arm switching element Sa, Sb, Sc and the lower arm switching element S'a, S'b, S'c which are connected in series with each other form a pair, and a total of three pairs of upper and lower arm switching elements are connected in parallel with each other (Sa&S'a, Sb&S'b, Sc&S'c). Diodes are connected in anti-parallel to each of the switching elements Sa, S'a, Sb, S'b, Sc, S'c.

The switching elements in the inverter 420 perform on/off operation of the respective switching elements based on the inverter switching control signal Sic from the inverter controller 430. Thus, the three-phase AC voltage having a certain frequency is output to the three-phase synchronous motor 250.

The inverter controller 430 can be configured to control a switching operation of the inverter 420, based on a sensorless method.

To this end, the inverter controller 430 can receive an output current io detected by the output current detector E.

The inverter controller 430 can output an inverter switching control signal Sic to each gate terminal of the inverter 420 in order to control the switching operation of the inverter 420. Accordingly, the inverter switching control signal Sic can be referred to as a gate driving signal.

Meanwhile, the inverter switching control signal Sic is a switching control signal of the pulse width modulation method PWM, and is generated and output based on the output current io detected by the output current detector E.

The output current detector E detects the output current io flowing between the inverter 420 and the three-phase motor 250. That is, the current flowing in the motor 250 can be detected.

The output current detector E can detect all of the output currents ia, ib, ic of each phase, or can detect the output currents of two phases by using three-phase equilibrium.

The output current detector E can be positioned between the inverter 420 and the motor 250, and a current transformer (CT), a shunt resistor, or the like can be used for current detection.

The detected output current io, as a discrete signal in the form of a pulse, can be applied to the inverter controller 430, and a switching control signal Sic is generated based on the detected output current io.

The position detection sensor 105 can sense rotor position information θ of the motor 250. The sensed position information θ can be input to the inverter controller 430.

Meanwhile, the three-phase motor 250 includes a stator and a rotor, and AC voltage of each phase having a certain frequency is applied to a coil of the stator of each phase (a, b, c phase), so that the rotor rotates.

Such a motor 250 can include, for example, a Surface-Mounted Permanent-Magnet Synchronous Motor (SMPMSM), an Interior Permanent Magnet Synchronous Motor (IPMSM), a Synchronous Reluctance Motor (Synrm), and the like. Among these, SMPMSM and IPMSM are a permanent magnet synchronous motor (PMSM) to which permanent magnet is applied, and Synrm has no permanent magnet.

Meanwhile, the motor 250 according to the embodiment of the present disclosure is described mainly based on an Interior Permanent Magnet Synchronous Motor (IPMSM).

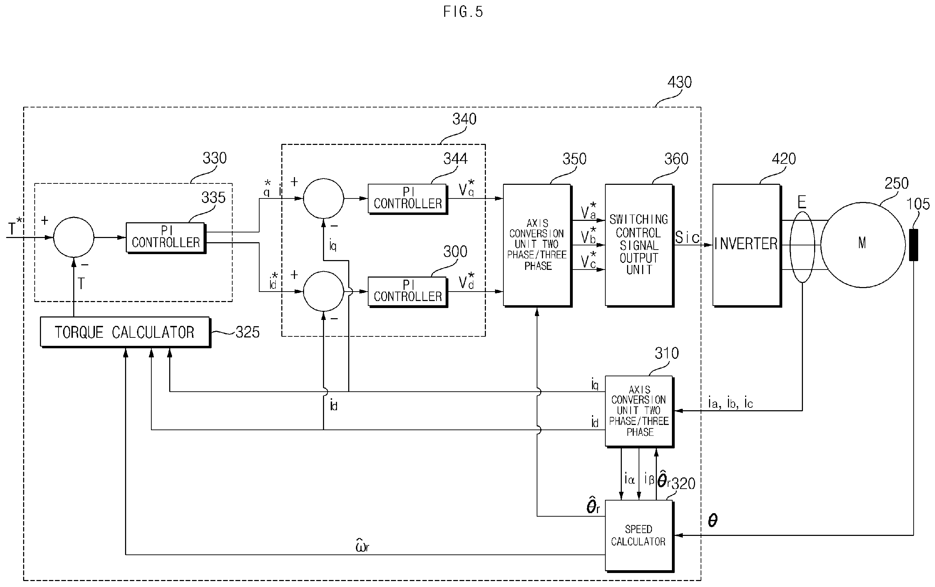

FIG. 5 is an example of an internal block diagram of an inverter controller of FIG. 4.

Referring to the drawing, the inverter controller 430 of FIG. 5 can receive the detected output current io from the output current detector 320, and receive rotor position information θ of the motor 250 from the position detection sensor 105.

The position detection sensor 105 can detect the magnetic pole position θ of the rotor of the motor 250. That is, the position detection sensor 105 can detect the position of the rotor of the motor 250.

To this end, the position detection sensor 105 can include an encoder, a resolver, or the like.

In the following descriptions, the coordinate system and coordinate axis used are defined here.

The αβ coordinate system is a two-dimensional fixed coordinate system whose axes are α and β axes which are fixed axes. The α and β axes are orthogonal to each other, and the β axis leads the α axis by electrical angle 90°.

The dq coordinate system is a two-dimensional rotary coordinate system having d and q axes that are rotational axis. In the rotary coordinate system that rotates at the same speed as the rotational speed of the magnetic flux made by the permanent magnet of the motor 250, the axis according to the direction of the magnetic flux made by the permanent magnet is the d axis, and the axis that leads the d axis by electrical angle 90 degrees is the q axis.

Referring to FIG. 5, the inverter controller 430 can include a speed calculator 320, an axis converter 310, a torque calculator 325, a current command generator 330, a voltage command generator 340, an axis converter 350, and a switching control signal output portion 360.

The axis converter 310 in the inverter controller 430 receives the three-phase output current (ia, ib, ic) detected by the output current detector E, and converts into a two-phase current (iα, iβ) of the stationary coordinate system.

Meanwhile, the axis converter 310 can convert the two-phase current (iα, iβ) of the stationary coordinate system into a two-phase current (id, iq) of the rotary coordinate system.

The speed calculator 320 in the inverter controller 430 estimates the rotor position of the motor 250, based on the two-phase current (iα, iβ) of the stationary coordinate system converted by the axis converter 310. In addition, based on the estimated rotor position , the calculated speed can be output.

The torque calculator 325 in the inverter controller 430 can calculate the current torque T, based on the calculated speed .

The current command generator 330 in the inverter controller 430 generates the current command values (i*d, i*q), based on the calculated current torque T and the torque command value T*.

For example, the current command generator 330 performs a PI control in a PI controller 335, based on the calculated current torque T and the torque command value T*, and can generate the current command value (i*d, i*q). Meanwhile, the value of the d-axis current command value i*d can be set to zero.

Meanwhile, the current command generator 330 can further include a limiter (not shown) for restricting the level so that the current command value (i*d, i*q) does not exceed an allowable range.

Next, the voltage command generator 340 generates d-axis and q-axis voltage command values (V*d, V*q), based on the d-axis and q-axis currents (id, iq) that are axis-converted into two-phase rotary coordinate system by the axis converter, and the current command value (i*d, i*q) in the current command generator 330, or the like.

For example, the voltage command generator 340 can perform the PI control in the PI controller 344, based on a difference between the q-axis current iq and the q-axis current command value i*q, and can generate the q-axis voltage command value V*q. In addition, the voltage command generator 340 can perform the PI control in the PI controller 348, based on a difference between the d-axis current id and the d-axis current command value i*d, and can generate the d-axis voltage command value V*d. Meanwhile, the value of the d-axis voltage command value V*d can be set to zero, in correspondence with the case where the value of the d-axis current command value i*d is set to zero.

Meanwhile, the voltage command generator 340 can further include a limiter (not shown) for restricting the level so that the d-axis and q-axis voltage command values (V*d, V*q) do not exceed the allowable range.

Meanwhile, the generated d-axis and q-axis voltage command values (V*d, V*q) are input to the axis converter 350.

The axis converter 350 receives the position calculated by the speed calculator 320 and the d-axis and q-axis voltage command values (V*d, V*q), and performs axis conversion.

First, the axis converter 350 performs conversion from a two-phase rotary coordinate system to a two-phase stationary coordinate system. In this case, the position calculated by the speed calculator 320 can be used.

In addition, the axis converter 350 performs conversion from two-phase stationary coordinate system to three-phase stationary coordinate system. Through this conversion, the axis converter 350 outputs the three-phase output voltage command value (V*a, V*b, V*c).

The switching control signal output portion 360 generates and outputs a switching control signal Sic according to the pulse width modulation PWM method based on the three-phase output voltage command value (V*a, V*b, V*c).

The output inverter switching control signal Sic can be converted into a gate driving signal by a gate motor driving device (not shown), and input to the gate of each switching element in the inverter 420. Thus, each of the switching elements (Sa, S'a, Sb, S'b, Sc, S'c) in the inverter 420 performs a switching operation.

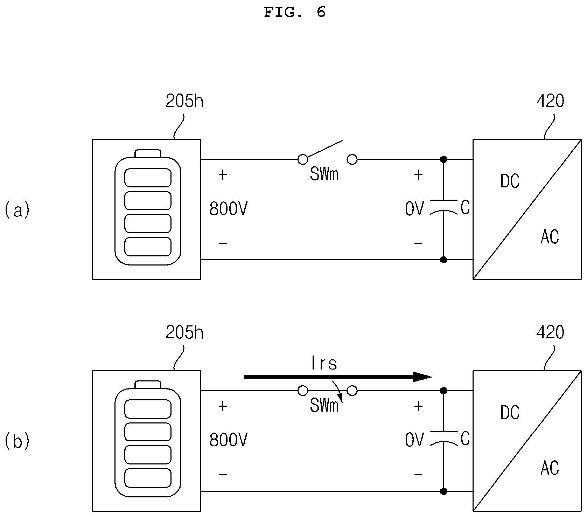

FIG. 6 is a diagram illustrating operations of a battery and an inverter related to the present disclosure.

Referring to the drawing, when a battery 205h stores a high voltage of approximately 800 V, if a switching element SWm between the battery 205h and the inverter 420 is turned off as illustrated in FIG. 6A and then turned on as illustrated in FIG. 6B, an inrush current Irs instantaneously flows from the battery 205h to the capacitor C at a moment when the switching element SWm is turned on.

For example, when a high voltage of approximately 800 V from the battery 205h is applied in a state in which a voltage of the capacitor C is discharged to 0 V, a considerably large inrush current Irs is generated, thereby increasing a possibility of damage to the capacitor C or the inverter 420.

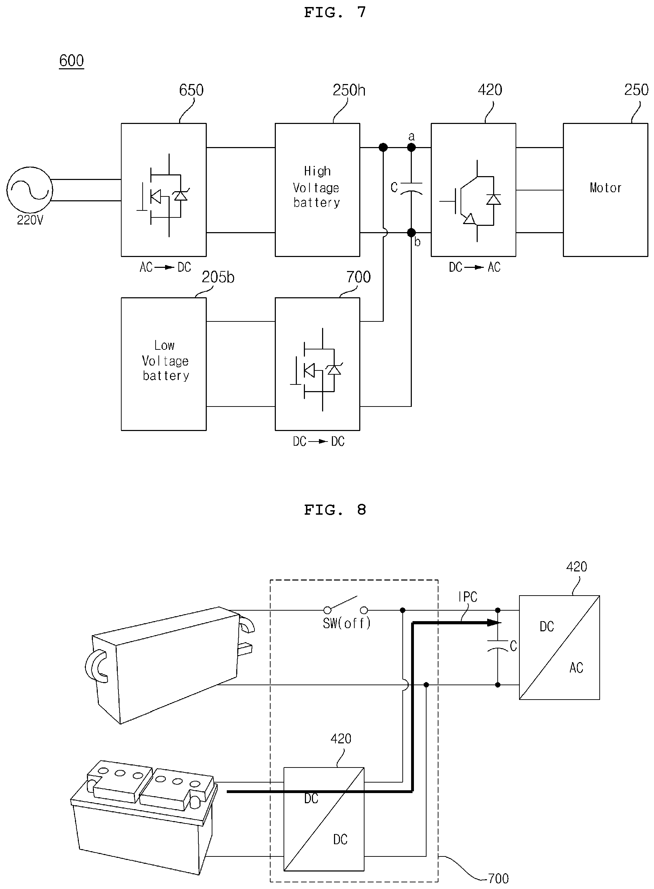

Accordingly, the present disclosure proposes a method which can prevent the damage to the capacitor C or the inverter 420. In particular, a method is proposed which stably pre-charges the capacitor to lower a level of the inrush current. This will be described with reference to FIG. 7 and below.

FIG. 7 is a block diagram illustrating a power conversion device according to an embodiment of the present disclosure.

Referring to the drawings, the power conversion device 600 according to the embodiment of the present disclosure includes a dc/dc converter 700 connected between a first battery 205b and a second battery 205h to convert a level of a direct current (DC) voltage, and the capacitor C which is a dc-terminal capacitor.

Meanwhile, the power conversion device 600 according to the embodiment of the present disclosure further includes the inverter 420 connected to the capacitor C, which is the dc-terminal capacitor.

Meanwhile, the inverter 420 can operate to drive the motor 250 by converting the DC voltage into an AC voltage based on the voltage of the capacitor C, which is the dc-terminal capacitor.

Meanwhile, the capacitor C and the inverter 420 can correspond to the capacitor C and the inverter 420 in the motor drive device 200 of FIG. 3.

Meanwhile, the power conversion device 600 according to the embodiment of the present disclosure can further include a converter 650 that converts an input AC voltage to the DC voltage. That is, the converter 650 can be an ac/dc converter.

Meanwhile, the converter 650 can be provided in the vehicle as an on-board charger.

Meanwhile, the second battery 205h can be disposed between the converter 650 and the inverter 420. Specifically, the second battery 205h can be disposed between the converter 650 and the capacitor C which is the dc-terminal capacitor.

Meanwhile, the dc/dc converter 700 within the power conversion device 600 according to the embodiment of the present disclosure can be a bidirectional converter.

For example, the second battery 205h, as a high-voltage battery, can store a high voltage of approximately 800 V, and the first battery 205b, as a low-voltage battery, can store a low voltage of approximately 15 V.

The power conversion device 600 according to an embodiment of the present disclosure may, in a charging mode, convert the input AC voltage to the DC voltage using the converter 650 and store the converted DC voltage in the second battery 205h.

Meanwhile, the power conversion device 600 according to the embodiment of the present disclosure may, in the charging mode, store the DC voltage stored in the second battery 205h into the first battery 205b.

In this case, in the charging mode, a current can flow from the second battery 205h toward the first battery 205b, and this current can be referred to as a forward current.

Meanwhile, the power conversion device 600 according to the embodiment of the present disclosure can operate the motor 250 by the inverter 420 performing a switching operation based on the voltage stored in the second battery 205h according to a motor driving mode.

Meanwhile, the power conversion device 600 according to the embodiment of the present disclosure can store a regenerative power from the motor 250 into the second battery 205h through the inverter 420 according to a motor regenerative mode.

Meanwhile, the power conversion device 600 according to the embodiment of the present disclosure performs a pre-charge mode when startup is turned on.

That is, the power conversion device 600 according to the embodiment of the present disclosure supplies the voltage stored in the first battery 205b to the capacitor C, which is the dc-terminal capacitor, during a pre-charge mode period.

In particular, the power conversion device 600 according to the embodiment of the present disclosure does not supply the DC voltage from the second battery 205h to the capacitor C which is the dc-terminal capacitor, but supplies the voltage stored in the first battery 205b to the capacitor C which is the dc-terminal capacitor, during the pre-charge mode period. Accordingly, in the pre-charge mode, the capacitor C can be stably pre-charged.

In addition, by using the voltage stored in the first battery 205b rather than the DC voltage from the second battery 205h to pre-charge the capacitor C, the possibility of the damage to the capacitor C due to the inrush current can be prevented.

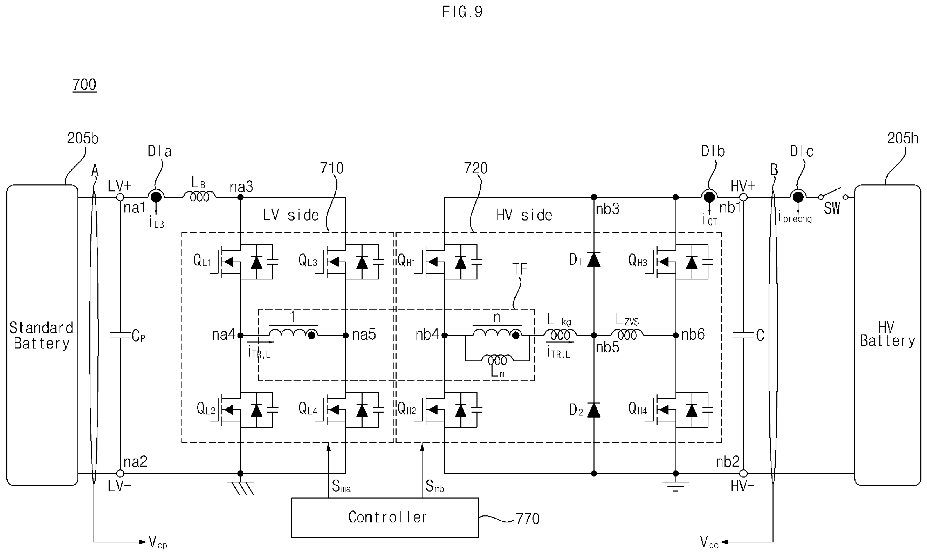

Meanwhile, a detailed operation of the dc/dc converter 700 within the power conversion device 600 according to the embodiment of the present disclosure is described with reference to FIG. 9 and below.

FIG. 8 is a diagram illustrating an example of an operation of the power conversion device of FIG. 7.

Referring to the drawing, the power conversion device 600 of FIG. 7 can supply a current from the first battery 205b toward the second battery 205h or the capacitor C according to the pre-charge mode. Such a current IPC can be named a reverse current.

Meanwhile, the power conversion device 600 according to the embodiment of the present disclosure can further include a battery switching element SW connected between the capacitor C and the second battery 205h, as illustrated in the drawing.

In the pre-charge mode, the battery switching element SW can be turned off, thereby not supplying the DC voltage from the second battery 205h to the capacitor C which is the dc-terminal capacitor.

Meanwhile, in the motor drive mode or motor regenerative mode, the battery switching element SW can be turned on.

Meanwhile, in the charging mode, the battery switching element SW is preferably turned off.

FIG. 9 is a diagram illustrating a dc/dc converter of FIG. 7.

Referring to the drawings, the dc/dc converter 700 within the power conversion device 600 according to the embodiment of the present disclosure includes: a first capacitor Cp connected to the first battery 205b; a second capacitor C connected to the second battery 205h; a transformer TF; a first full bridge switching portion 710 between the first capacitor Cp and an input side of the transformer TF; and a second full bridge switching portion 720 between the second capacitor C and an output side of the transformer TF.

Meanwhile, in the pre-charge mode, during operations of the first full bridge switching portion 710 and the second full bridge switching portion 720, turn-off timings of some switching elements of the second full bridge switching portion 720 are delayed. Accordingly, the capacitor C can be stably pre-charged. In particular, the damage to the capacitor C can be prevented.

Meanwhile, the first full-bridge switching portion 710 can include a first switching element QL1 and a second switching element QL2 corresponding to a first leg, which are connected in series with each other, and a third switching element QL3 and a fourth switching element QL4 corresponding to a second leg connected in parallel to the first leg, which are connected in series with each other. Accordingly, power conversion can be efficiently performed.

Meanwhile, the power conversion device 600 according to the embodiment of the present disclosure can further include an inductor LB connected between the first capacitor Cp and the first full bridge switching portion 710, and a first current detector DIa detecting a current flowing on the inductor LB.

Referring to the drawing, the first capacitor Cp is disposed between a node na1 and a node na2, which are both terminals of the first battery 205b.

Meanwhile, one terminal of a primary side of the transformer TF is connected to a node na4, which is a node between the first switching element QL1 and the second switching element QL2, and the other terminal of the primary side of the transformer TF can be connected to a node na5, which is a node between the third switching element QL3 and the fourth switching element QL4.

Meanwhile, between the node na3, which is one terminal of the first switching element QL1, and the node na1, the inductor LB and a first current detector DIa that detects a current iLB flowing on the inductor LB can be disposed.

The current iLB detected by the first current detector DIa can be input into a controller 770.

Meanwhile, the power conversion device 600 according to the embodiment of the present disclosure can further include a first voltage detector A that detects a voltage across both terminals of the first capacitor Cp.

That is, the first voltage detector A detecting a voltage Vcp across both terminals of the first capacitor Cp can be disposed between the node na1 and the node na2, which are both terminals of the first battery 205b.

The voltage Vcp detected by the first voltage detector A can be input into the controller 770.

Meanwhile, the first full bridge switching portion 720 can include a fifth switching element QH1 and a sixth switching element QH2 corresponding to a third leg, which are connected in series with each other, and a seventh switching element QH3 and an eighth switching element QH4 corresponding to a fourth leg connected in parallel to the third leg, which are connected in series with each other. Accordingly, the power conversion can be efficiently performed.

Meanwhile, the second full bridge switching portion 720 can further include a first diode element D1 and a second diode element D2 connected in series to each other and connected in parallel to the third and fourth legs. Accordingly, the power conversion can be efficiently performed.

Meanwhile, one terminal of a secondary side of the transformer TF can be connected to node nb4, which is a node between a fifth switching element QH1 and a sixth switching element QH2.

Meanwhile, a leakage inductor LIkg can be disposed between a node nb5 which is a node between the first diode element D1 and the second diode element D2, and the other terminal of the primary side of the transformer TF.

Meanwhile, a zero-voltage inductor Lzv can be disposed between a node na6, which is a node between the seventh switching element QH3 and the eighth switching element QH4, and the node nb5.

Meanwhile, the power conversion device 600 according to the embodiment of the present disclosure can further include a battery switching element SW connected between the second capacitor C and the second battery 205h.

Meanwhile, the power conversion device 600 according to the embodiment of the present disclosure can further include a second current detector DIb disposed between the second full bridge switching portion 720 and the second capacitor C, and a third current detector DIc disposed between the second capacitor C and the second battery 205h.

That is, the second current detector Dib can be disposed between the node nb5, and the node nb1 which is one terminal of the second capacitor C.

Accordingly, the second current detector DIb can detect a current iCT which flows through the second full bridge switching portion 720. The current iCT detected by the second current detector DIb can be input into the controller 770.

Meanwhile, a third current detector DIc can be disposed between the node nb1, which is one terminal of the second capacitor C, and the second battery 205h.

Accordingly, the third current detector DIc can detect a current iprechg which flows between the second capacitor C and the second battery 205h. The current iprechg detected by the third current detector DIc can be input into the controller 770.

Meanwhile, the power conversion device 600 according to the embodiment of the present disclosure can further include a second voltage detector B that detects a voltage Vdc across both terminals of the second capacitor C.

Both terminals of the second capacitor C serve as dc terminals, and the dc-terminal voltage Vdc detected by the second voltage detector B can be input into the controller 770.

Meanwhile, the power conversion device 600 according to the embodiment of the present disclosure can further include the controller (770) that controls the first full bridge switching portion 710 and the second full bridge switching portion 720.

Meanwhile, in the pre-charge mode, during operations of the first full bridge switching portion 710 and the second full bridge switching portion 720, the controller 770 according to the embodiment of the present disclosure can control turn-off timings of some switching elements of the second full bridge switching portion 720 to be delayed.

In particular, in the pre-charge mode, during the operations of the first full bridge switching portion 710 and the second full bridge switching portion 720, the controller 770 can control the turn-off timings of some switching elements of the second full bridge switching portion 720 to be delayed. Accordingly, the capacitor C can be stably pre-charged. In particular, the damage to the capacitor C can be prevented.

Meanwhile, the controller 770 can be configured to decrease the delay as a difference between the voltage of the first battery 205b and the voltage of the second battery 205h increases in the pre-charge mode.

For example, when the voltage of the first battery 205b is approximately 15 V and the voltage of the second battery 205h is approximately 400 V, such that a voltage difference is approximately 385 V, a delay period can be controlled to be approximately Tda.

As another example, when the voltage of the first battery 205b is approximately 15 V and the voltage of the second battery 205h is approximately 800 V, such that the voltage difference is approximately 785 V, the delay period can be controlled to be approximately Tda/2 which is less than Tda. Accordingly, the capacitor C can be efficiently pre-charged.

Meanwhile, the controller 770 can be configured to decrease the delay when the voltage of the second capacitor C increases in the pre-charge mode.

For example, in the pre-charge mode, if the voltage of the second capacitor C is 0 V at a first timing, and then increases to 5 V at a second timing, the controller 770 can control the delay set at the second timing to be Tdbb, which is less than Tdb that is the delay set at the first timing. Accordingly, the capacitor C can be efficiently pre-charged.

Meanwhile, the controller 770 can be configured to decrease the delay when the current iLB which flows on the inductor LB decreases in the pre-charge mode.

For example, in the pre-charge mode, when the current iLB which flows on the inductor LB is approximately 10 A at the first timing and decreases to approximately 5 A at the second timing, the controller 770 can control the delay set at the second timing to be Tdcb, which is less than Tdc, the delay set at the first timing. Accordingly, the capacitor (C) can be efficiently pre-charged. Accordingly, the capacitor C can be efficiently pre-charged.

Meanwhile, the controller 770 can control a reverse current to flow toward the second capacitor C in the first capacitor Cp in the pre-charge mode.

Meanwhile, the controller 770 can control a forward current to flow toward the first capacitor C in the second capacitor C after termination of the pre-charge mode. Accordingly, after the pre-charge mode, the first battery 205b can be stably charged.

Meanwhile, after the pre-charge mode, the controller 770 can control the voltage from the second battery 205h to be stored in the second capacitor C, and control the inverter 420 to operate based on the voltage stored in the second capacitor C. Accordingly, a motor operation mode can be stably performed.

Meanwhile, the controller 770 can control the battery switching element SW to be turned off in the pre-charge mode. Accordingly, the capacitor C can be efficiently pre-charged.

Meanwhile, the controller 770 can control the battery switching element SW to be turned on after the pre-charge mode. Accordingly, after the pre-charge mode, the first battery 205b can be stably charged.

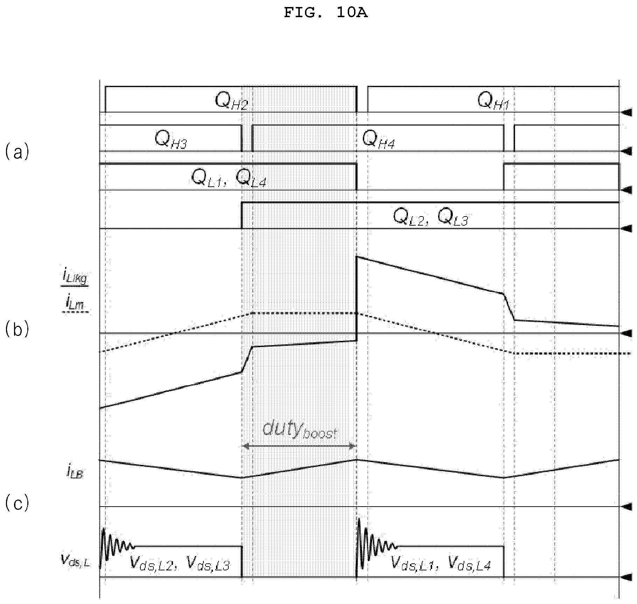

FIGS. 10A to 11F are diagrams referred to for description of the operation of FIG. 9.

FIG. 10A illustrates an example of the operation of the dc/dc converter related to the present disclosure.

Referring to the drawing, (a) of FIG. 10A illustrates an example of operation waveforms of a plurality of switching elements QL1 to QL4 within the first full bridge switching portion 710 and a plurality of switching elements QL1 to QL4 within the second full bridge switching portion 720 related to the present disclosure in the pre-charge mode.

First, during a first interval in a turn-on interval of the first switching element QL1 and the fourth switching element QL4 within the first full bridge switching portion 710, the second switching element QL2 and the third switching element QL3 within the first full bridge switching portion 710 can be turned off, and the sixth switching element QH2 and the seventh switching element QH3 within the second full bridge switching portion 720 can be turned on.

Next, during a second interval after the first interval in the turn-on interval of the first switching element QL1 and the fourth switching element QL4 within the first full bridge switching portion 710, the second switching element QL2 and the third switching element QL3 within the first full bridge switching portion 710 can be turned on, and the sixth switching element QH2 within the second full bridge switching portion 720 can be turned on and the seventh switching element QH3 can be turned off.

Next, during a third interval after the second interval in the turn-on interval of the first switching element QL1 and the fourth switching element QL4 within the first full bridge switching portion 710, the second switching element QL2 and the third switching element QL3 within the first full bridge switching portion 710 can be turned on, and the sixth switching element QH2 and the eighth switching element QH4 within the second full bridge switching portion 720 can be turned on.

Next, after the turn-on interval of the first switching element QL1 and the fourth switching element QL4 within the first full bridge switching portion 710, the first switching element QL1 and the fourth switching element QL4 within the first full bridge switching portion 710 are turned off.

Meanwhile, first, during a first interval in turn-off interval of the first switching element QL1 and the fourth switching element QL4 within the first full bridge switching portion 710, the second switching element QL2 and the third switching element QL3 within the first full bridge switching portion 710 can be turned on, the sixth switching element QH2 within the second full bridge switching portion 720 can be turned off, and the eighth switching element QH4 can be turned on.

Next, during a second interval after the first interval in the turn-off interval after the turn-on interval of the first switching element QL1 and the fourth switching element QL4 within the first full bridge switching portion 710, the second switching element QL2 and the third switching element QL3 within the first full bridge switching portion 710 can be turned on, and the fifth switching element QH1 and the eighth switching element QH4 within the second full bridge switching portion 720 can be turned on.

Next, after the turn-off interval of the first switching element QL1 and the fourth switching element QL4 within the first full bridge switching portion 710, the first switching element QL1 and the fourth switching element QL4 within the first full bridge switching portion 710 are turned on again.

Meanwhile, during a fourth interval in the turn-on interval of the first switching element QL1 and the fourth switching element QL4 within the first full bridge switching portion 710, the second switching element QL2 and the third switching element QL3 within the first full bridge switching portion 710 can be turned on, the fifth switching element QH1 within the second full bridge switching portion 720 can be turned on, and the eighth switching element QH4 can be turned off.

Next, during a fifth interval after the fourth interval in the turn-on interval of the first switching element QL1 and the fourth switching element QL4 within the first full bridge switching portion 710, the second switching element QL2 and the third switching element QL3 within the first full bridge switching portion 710 can be turned on, and the fifth switching element QH1 within the second full bridge switching portion 720 can be turned on and the seventh switching element QH3 can be turned on.

That is, according to (a) of FIG. 10A, based on the first switching element QL1 and the fourth switching element QL4, the intervals can be divided into the first interval, the second interval, and the third interval of the turn-on interval, the first interval and the second interval of the turn-off interval, and the fourth interval and the fifth interval of the turn-on interval.

Meanwhile, based on the first switching element QL1 and the fourth switching element QL4, a boost operation is performed during the second interval and the third interval of the turn-on interval.

Meanwhile, (b) and (c) of FIG. 10A illustrate, based on a driving waveform of (a) of FIG. 10A, the current iLIkg flowing on the leakage inductor LIkg, the current iLM flowing on the secondary side of the transformer TF, the current iLB flowing on the inductor LB, drain-source voltages VdsL2 and VdsL3 of the second switching element QL2 and the third switching element QL3, and drain-source voltages VdsL1 and VdsL4 of the first switching element QL1 and the fourth switching element QL4, respectively.

According to (c) of FIG. 10A, in the pre-charge mode, when the first full-bridge switching portion 710 and the second full-bridge switching portion 720 are operated by the waveform of (a) in FIG. 10A, there is a disadvantage that a ringing voltage is generated in each switching element of the first full-bridge switching portion 710.

The ringing voltage can be generated when there is an insufficient build-up time in the pre-charge mode. Meanwhile, there is a disadvantage that a transient current increases as an input/output range becomes wider.

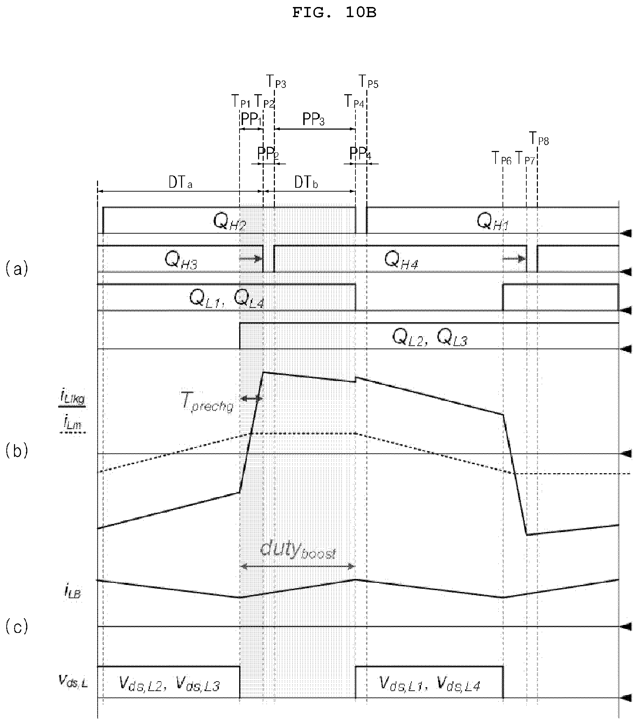

Accordingly, the present disclosure proposes a method for reducing the ringing voltage as illustrated in (c) of FIG. 10A by controlling the build-up time. This will be described with reference to FIG. 10B.

FIG. 10B illustrates an example of an operation of the dc/dc converter according to an embodiment of the present disclosure.

Referring to the drawing, (a) of FIG. 10A illustrates an example of operation waveforms of the plurality of switching elements QL1 to QL4 within the first full bridge switching portion 710 and the plurality of switching elements QL1 to QL4 within the second full bridge switching portion 720 according to the present disclosure in the pre-charge mode.

First, during a first interval TP0 to TP1 in turn-on intervals of the first switching element QL1 and the fourth switching element QL4 within the first full bridge switching portion 710, the second switching element QL2 and the third switching element QL3 within the first full bridge switching portion 710 can be turned off, and the sixth switching element QH2 and the seventh switching element QH3 within the second full bridge switching portion 720 can be turned on.

Next, during a second interval PP1 after the first interval TP0 to TP1 in the turn-on intervals of the first switching element QL1 and the fourth switching element QL4 within the first full bridge switching portion 710, the second switching element QL2 and the third switching element QL3 within the first full bridge switching portion 710 can be turned on, and the sixth switching element QH2 within the second full bridge switching portion 720 can be turned on and the seventh switching element QH3 can be turned on.

That is, in the pre-charge mode, during a turn-off delay interval PP1 in which the turn-off timing of the seventh switching element QH3, which is a partial switching element of the second full bridge switching portion 720, is delayed, the sixth switching element QH2, which is the other partial switching element of the second full bridge switching portion 720, can be turned on, and the switching elements QL1 to QL4 in the first full bridge switching portion 710 can be turned on.

Compared to (a) in FIG. 10A, the turn-off timing of the seventh switching element QH3, which is a partial switching element of the second full bridge switching portion 720, is delayed to TP2 instead of TP1.

That is, the turn-off timing of the seventh switching element QH3, which is a partial switching element of the second full bridge switching portion 720, can be delayed as long as a period PP1.

Meanwhile, the period PP1, as described above, can vary according to the difference between the voltage of the first battery 205b and the voltage of the second battery 205h, or according to an increase in the voltage of the second capacitor C, etc.

Meanwhile, in the pre-charge mode, the turn-off timing of the seventh switching element QH3, which is a partial switching element of the second full bridge switching portion 720, is delayed, so that a distance DTb between the turn-off timing TP2 of the seventh switching element QH3 and the turn-off timing TP4 of the sixth switching element QH2, which is the other partial switching element of the second full bridge switching portion 720, can be less than a distance DTa between the turn-off timing TP2 of the seventh switching element QH3 which is a partial switching element of the second full-bridge switching portion 720 and the turn-on timing TP0 of the sixth switching element QH2, which is the other partial switching element of the second full bridge switching portion 720. Accordingly, the capacitor C can be stably pre-charged.

Next, during a third interval PP2 after the second interval PP1 in the turn-on interval of the first switching element QL1 and the fourth switching element QL4 within the first full bridge switching portion 710, the second switching element QL2 and the third switching element QL3 within the first full bridge switching portion 710 can be turned on, and the sixth switching element QH2 within the second full bridge switching portion 720 can be turned on and the seventh switching element QH3 can be turned off.

That is, after the turn-off delay interval PP1, the seventh switching element QH3, which is a partial switching element of the second full bridge switching portion 720, is turned off.

Meanwhile, during a turn-off interval PP2 in which the seventh switching element QH3 which is the partial switching element of the second full bridge switching portion 720 is turned off, the sixth switching element QH2, which is the other partial switching element of the second full bridge switching portion 720, can be turned on, and the switching elements QL1 to QL4 within the first full bridge switching portion 710 can be turned on.

Next, during a fourth interval PP3 after the third interval PP2 in the turn-on interval of the first switching element QL1 and the fourth switching element QL4 within the first full bridge switching portion 710, the second switching element QL2 and the third switching element QL3 within the first full bridge switching portion 710 can be turned on, and the sixth switching element QH2 within the second full bridge switching portion 720 can be turned on and the eighth switching element QH4 can be turned on.

That is, after the turn-off interval PP2 of the seventh switching element QH3, during the turn-on interval PP3 in which the eighth switching element QH4 which is another partial switching element of the second full bridge switching portion 720 is turned on, the sixth switching element QH2, which is the other partial switching element of the second full bridge switching portion 720, can be turned on, and the switching elements QL1 to QL4 within the first full bridge switching portion 710 can be turned on.

Next, the first switching element QL1 and the fourth switching element QL4 within the first full bridge switching portion 710 are turned off at the timing TP4.

Next, during a first interval PP4 in the turn-off interval of the first switching element QL1 and the fourth switching element QL4 within the first full bridge switching portion 710, the second switching element QL2 and the third switching element QL3 within the first full bridge switching portion 710 can be turned on, the sixth switching element QH2 within the second full bridge switching portion 720 can be turned off, and the eighth switching element QH4 can be turned on.

That is, after the turn-on interval PP3 of the eighth switching element QH4, the eighth switching element QH4 which is another partial switching element of the second full bridge switching portion 720 can be maintained to be turned on, the sixth switching element QH2, which is the other partial switching element of the second full bridge switching portion 720, can be turned off, partial switching elements QL1 and QL4 within the first full bridge switching portion 710 can be turned off, and other partial switching elements QL2 and QL3 within the first full bridge switching portion 710 can be turned on.

Next, during a second interval TP5 to TP6 after the first interval PP4 in the turn-off interval of the first switching element QL1 and the fourth switching element QL4 within the first full bridge switching portion 710, the second switching element QL2 and the third switching element QL3 within the first full bridge switching portion 710 can be turned on, and the fifth switching element QH1 and the eighth switching element QH4 within the second full bridge switching portion 720 can be turned on.

Next, the first switching element QL1 and the fourth switching element QL4 within the first full bridge switching portion 710 are turned on again at the timing TP6.

Meanwhile, during a fifth interval TP6 to TP7 in the turn-on interval of the first switching element QL1 and the fourth switching element QL4 within the first full bridge switching portion 710, the second switching element QL2 and the third switching element QL3 within the first full bridge switching portion 710 can be turned on, the fifth switching element QH1 within the second full bridge switching portion 720 can be turned on, and the eighth switching element QH4 can be turned off.

Next, during a sixth interval TP7 to TP8 after the fifth interval TP6 to TP7 in the turn-on interval of the first switching element QL1 and the fourth switching element QL4 within the first full bridge switching portion 710, the second switching element QL2 and the third switching element QL3 within the first full bridge switching portion 710 can be turned on, and the fifth switching element QH1 within the second full bridge switching portion 720 can be turned on and the eighth switching element QH4 can be turned off.

Next, during a seventh interval after the sixth interval TP7 to TP8 in the turn-on interval of the first switching element QL1 and the fourth switching element QL4 within the first full bridge switching portion 710, the second switching element QL2 and the third switching element QL3 within the first full bridge switching portion 710 can be turned on, and the fifth switching element QH1 within the second full bridge switching portion 720 can be turned on and the seventh switching element QH3 can be turned on.

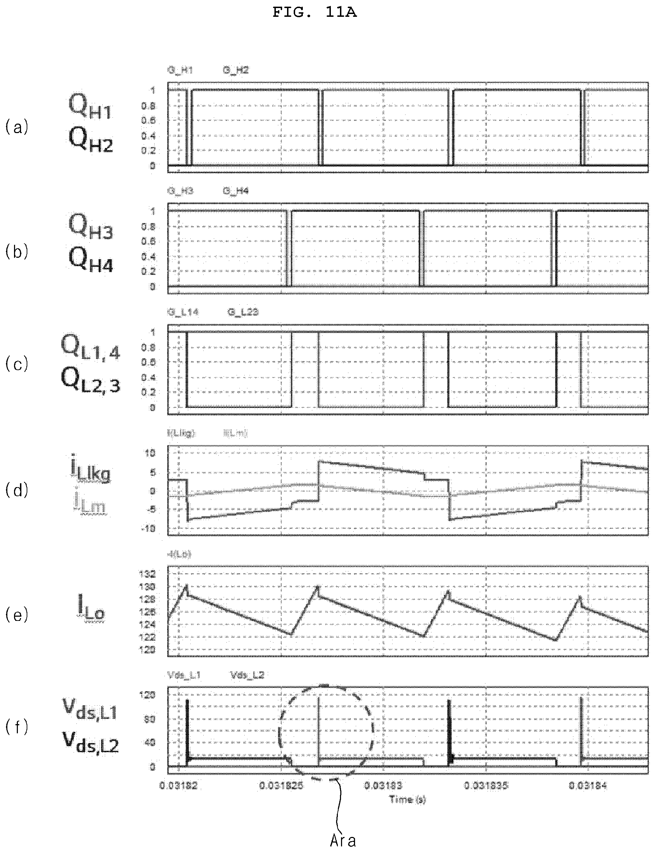

That is, according to (a) of FIG. 11A, based on the first switching element QL1 and the fourth switching element QL4, the intervals can be divided into the first interval TP0 to TP1, the second interval PP1, the third interval PP2, and the fourth interval PP3 of the turn-on interval, the first interval PP4 and the second interval of the turn-off interval, and the fifth interval, the sixth interval, and the seventh interval of the turn-on interval.

Compared to (a) in FIG. 10, according to (a) in FIG. 11A, the turn-off timings of the seventh switching element QH3 in the second interval PP1 and the eighth switching element QH4 in the fifth interval can be delayed.

Meanwhile, based on the first switching element QL1 and the fourth switching element QL4, the boost operation is performed during the second interval PP1, the third interval PP2, and the fourth interval PP3 of the turn-on interval.

Meanwhile, (b) to (c) of FIG. 11A illustrate, based on a driving waveform of (a) of FIG. 11A, the current iLIkg flowing on the leakage inductor LIkg, the current iLM flowing on the secondary side of the transformer TF, the current iLB flowing on the inductor LB, drain-source voltages VdsL2 and VdsL3 of the second switching element QL2 and the third switching element QL3, and drain-source voltages VdsL1 and VdsL4 of the first switching element QL1 and the fourth switching element QL4, respectively.

Referring to (c) of FIG. 11A, when the first full bridge switching portion 710 and the second full bridge switching portion 720 are operated by the waveform of (a) in FIG. 11A, the ringing voltage is not generated in each switching element of the first full bridge switching portion 710.

Meanwhile, the power conversion device 600 according to another embodiment of the present disclosure includes: a first capacitor Cp connected to the first battery 205b; a second capacitor C connected to the second battery 205h; a first full bridge switching portion 710 between the first capacitor Cp and an input side of the transformer TF; and a second full bridge switching portion 720 between the second capacitor C and an output side of the transformer TF, and in the pre-charge mode, the turn-off timing of the seventh switching element QH3, which is a partial switching element of the second full bridge switching portion 720, is delayed, and wherein a distance DTb between the turn-off timing TP2 of the seventh switching element QH3 of the second full bridge switching portion 720 and the turn-off timing TP4 of the sixth switching element QH2, which is the other partial switching element, is less than the distance DTa between the turn-off timing TP2 of the seventh switching element QH3, which is a partial switching element of the second full bridge switching portion 720, and the turn-on timing TP0 of the sixth switching element QH2, which is the other partial switching element. Accordingly, the capacitor C can be stably pre-charged. In particular, the damage to the capacitor C can be prevented.

Meanwhile, the controller 770 according to the embodiment of the present disclosure can compute a voltage vCT of an output terminal of the second full bridge switching portion 720 based on the current iCT flowing on the second full bridge switching portion 720 detected by the second current detector DIb.

Meanwhile, the controller 770 according to the embodiment of the present disclosure can calculate the build-up time or delay time based on the current iprechg flowing between the second capacitor C and the second battery 205h from the third current detector DIc, the current iLB flowing on the inductor LB from the first current detector DIa, and the voltage vCT of the output terminal of the second full bridge switching portion 720.

Meanwhile, the controller 770 according to the embodiment of the present disclosure can calculate a phase of the build-up time or a phase of the delay time based on the DC terminal voltage Vdc from the second voltage detector B and the current iprechg flowing between the second capacitor C and the second battery 205h from the third current detector DIc.

Meanwhile, the controller 770 according to the embodiment of the present disclosure can output a first switching control signal Sma for switching a control of the first full-bridge switching portion 710 and a second switching control signal Smb for switching a control of the second full-bridge switching portion 720 based on the computed build-up time or delay time and the phase of the build-up time, or the phase of the delay time.

That is, the controller 770 according to the embodiment of the present disclosure can compute an optimal build-up time by feedback control, and stably pre-charge the capacitor C without generating the ringing voltage. In particular, the damage to the capacitor C can be prevented.

FIG. 11A is a diagram illustrating an example of an operation waveform corresponding to the driving method of FIG. 10A.

Referring to the drawing, (a) of FIG. 11A illustrates an example of the driving waveforms of the fifth switching element QH1 and the sixth switching element QH2 within the second full bridge switching portion 720 according to the driving method of FIG. 10A. The fifth switching element QH1 and the sixth switching element QH2 can operate complementarily.

(b) of FIG. 11A illustrates an example of the driving waveforms of the seventh switching element QH3 and the eighth switching element QH4 within the second full bridge switching portion 720 according to the driving method of FIG. 10A. The seventh switching element QH3 and the eighth switching element QH4 can operate complementarily.

(c) of FIG. 11A illustrates an example of the driving waveforms of the first switching element QL1 and the fourth switching element QL4 and the driving waveforms of the second switching element QL2 and the third switching element QL3 within the first full bridge switching portion 710 according to the driving method of FIG. 10A.

The driving waveforms of the first switching element QL1 and the fourth switching element QL4 can be complementary to the driving waveforms of the second switching element QL2 and the third switching element QL3.

(d) of FIG. 11A illustrates an example of the current iLIkg flowing on the leakage inductor LIkg and the current iLM flowing on the secondary side of the transformer TF, based on the driving waveforms of (a) to (c) of FIG. 11A.

(e) of FIG. 11A illustrates an example of an output current iLo of the dc/dc converter based on the driving waveforms of (a) to (c) of FIG. 11A.

(f) of FIG. 11A illustrates drain-source voltages VdsL1 and VdsL2 of the first switching element QL1 and the second switching element QL2, respectively based on the driving waveforms of (a) to (c) of FIG. 11A.

As in an area Ara of (f) of FIG. 11A, there is a disadvantage that the ringing voltage is generated at each switching element of the first full bridge switching portion 710.

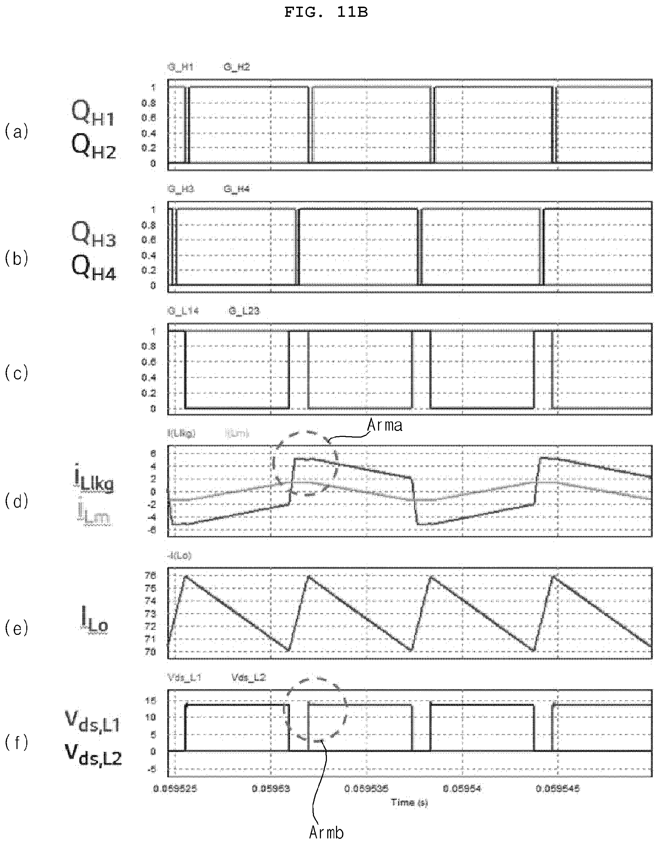

FIG. 11B is a diagram illustrating an example of an operation waveform corresponding to the driving method of FIG. 10B.

Referring to the drawing, (a) of FIG. 11B illustrates an example of the driving waveforms of the fifth switching element QH1 and the sixth switching element QH2 within the second full bridge switching portion 720 according to the driving method of FIG. 10B. The fifth switching element QH1 and the sixth switching element QH2 can operate complementarily.

(b) of FIG. 11B illustrates an example of the driving waveforms of the seventh switching element QH3 and the eighth switching element QH4 within the second full bridge switching portion 720 according to the driving method of FIG. 10B. The seventh switching element QH3 and the eighth switching element QH4 can operate complementarily.

(c) of FIG. 11B illustrates an example of the driving waveforms of the first switching element QL1 and the fourth switching element QL4 and the driving waveforms of the second switching element QL2 and the third switching element QL3 within the first full bridge switching portion 710 according to the driving method of FIG. 10B.

The driving waveforms of the first switching element QL1 and the fourth switching element QL4 can be complementary to the driving waveforms of the second switching element QL2 and the third switching element QL3.

(d) of FIG. 11B illustrates an example of the current iLIkg flowing on the leakage inductor LIkg and the current iLM flowing on the secondary side of the transformer TF, based on the driving waveforms of (a) to (c) of FIG. 11B.

Referring to the drawing, since an operation is performed in the pre-charge mode based on the optimal build-up time, a tolerance due to leakage inductance does not occur, as in an area Arma.

(e) of FIG. 11B illustrates an example of an output current iLo of the dc/dc converter based on the driving waveforms of (a) to (c) of FIG. 11B.

(f) of FIG. 11B illustrates drain-source voltages VdsL1 and VdsL2 of the first switching element QL1 and the second switching element QL2, respectively based on the driving waveforms of (a) to (c) of FIG. 11B.

As in an area Armb of (f) of FIG. 11B, no ringing voltage is generated at each switching element of the first full bridge switching portion 710.

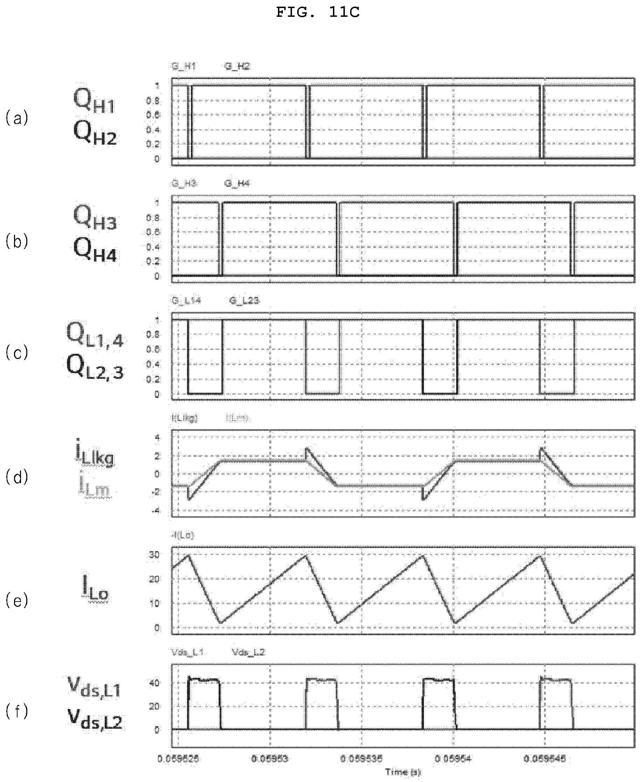

FIG. 11C is a diagram illustrating another example of the operation waveform corresponding to the driving method of FIG. 10A.

Referring to the drawings, FIG. 11C illustrates a high-voltage-based operation waveform compared to FIG. 11A.

That is, (a) of FIG. 11C illustrates another example of the driving waveforms of the fifth switching element QH1 and the sixth switching element QH2 within the second full bridge switching portion 720 according to the driving method of FIG. 10A.

(b) of FIG. 11C illustrates another example of the driving waveforms of the seventh switching element QH3 and the eighth switching element QH4 within the second full bridge switching portion 720 according to the driving method of FIG. 10A.

(c) of FIG. 11C illustrates another example of the driving waveforms of the first switching element QL1 and the fourth switching element QL4 and the driving waveforms of the second switching element QL2 and the third switching element QL3 within the first full bridge switching portion 710 according to the driving method of FIG. 10A.

(d) of FIG. 11C illustrates another example of the current iLIkg flowing on the leakage inductor LIkg and the current iLM flowing on the secondary side of the transformer TF, based on the driving waveforms of (a) to (c) of FIG. 11C.

Referring to the drawing, the current iLIkg flowing on the leakage inductor LIkg can appear unstable.

(e) of FIG. 11C illustrates another example of the output current iLo of the dc/dc converter based on the driving waveforms of (a) to (c) of FIG. 11C.

(f) of FIG. 11C illustrates drain-source voltages VdsL1 and VdsL2 of the first switching element QL1 and the second switching element QL2, respectively based on the driving waveforms of (a) to (c) of FIG. 11C.

Referring to the drawing, there is a disadvantage that noise is generated in the drain-source voltages VdsL1 and VdsL2 of the first switching element QL1 and the second switching element QL2.

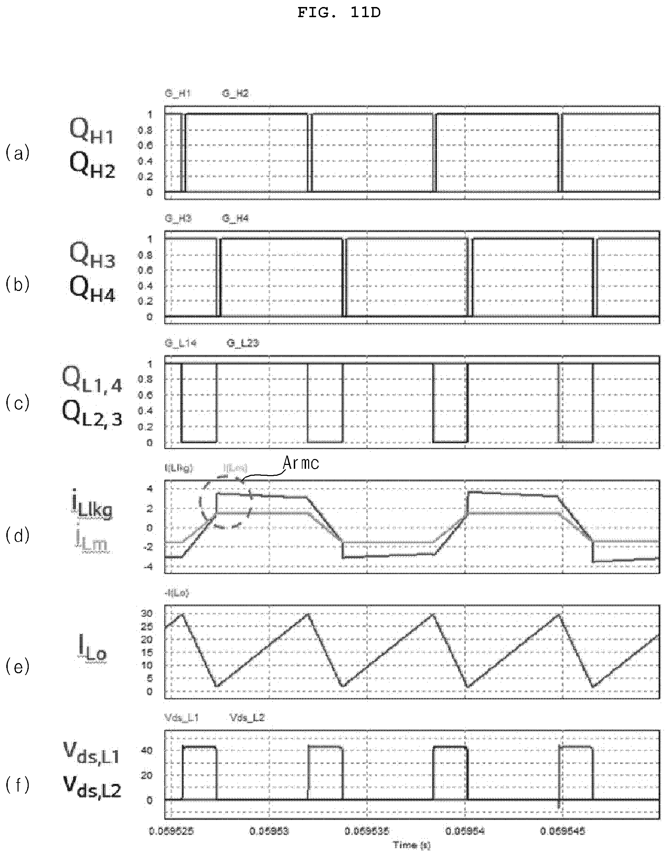

FIG. 11D is a diagram illustrating an example of an operation waveform corresponding to the driving method of FIG. 10B.

Referring to the drawings, FIG. 11D illustrates a high-voltage-based operation waveform compared to FIG. 11B.

That is, (a) of FIG. 11D illustrates another example of the driving waveforms of the fifth switching element QH1 and the sixth switching element QH2 within the second full bridge switching portion 720 according to the driving method of FIG. 10B.

(b) of FIG. 11D illustrates another example of the driving waveforms of the seventh switching element QH3 and the eighth switching element QH4 within the second full bridge switching portion 720 according to the driving method of FIG. 10B.

(c) of FIG. 11D illustrates another example of the driving waveforms of the first switching element QL1 and the fourth switching element QL4 and the driving waveforms of the second switching element QL2 and the third switching element QL3 within the first full bridge switching portion 710 according to the driving method of FIG. 10B.

(d) of FIG. 11D illustrates another example of the current iLIkg flowing on the leakage inductor LIkg and the current iLM flowing on the secondary side of the transformer TF, based on the driving waveforms of (a) to (c) of FIG. 11D.

Referring to the drawing, since an operation is performed in the pre-charge mode based on the optimal build-up time, a tolerance due to leakage inductance does not occur, as in an area Armc.

(e) of FIG. 11D illustrates another example of the output current iLo of the dc/dc converter based on the driving waveforms of (a) to (c) of FIG. 11D.

(f) of FIG. 11D illustrates the drain-source voltages VdsL1 and VdsL2 of the first switching element QL1 and the second switching element QL2, respectively based on the driving waveforms of (a) to (c) of FIG. 11D.

Referring to the drawing, noise can be reduced in the drain-source voltages VdsL1 and VdsL2 of the first switching element QL1 and the second switching element QL2 compared to (f) of FIG. 11C.

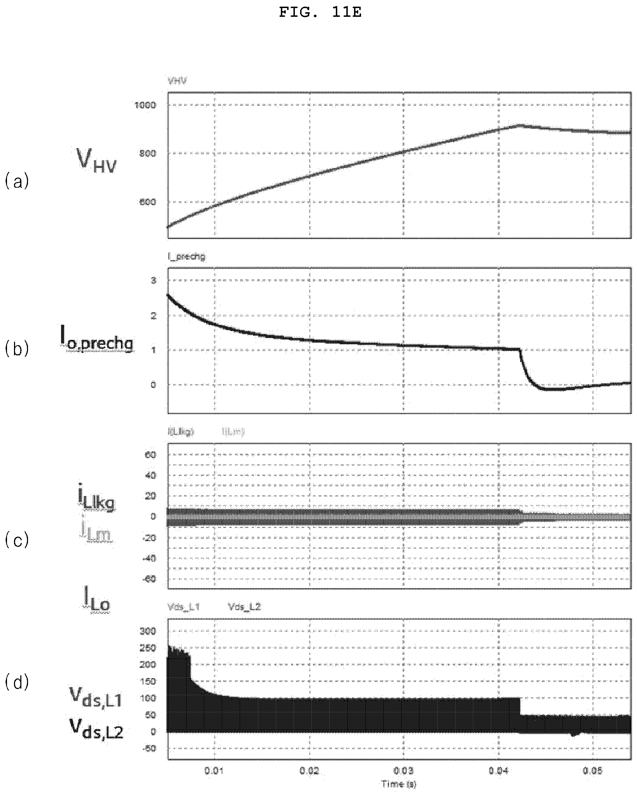

FIG. 11E illustrates an example of a waveform during charging in a method corresponding to FIG. 10A.

Referring to the drawing, (a) of FIG. 11E illustrates a voltage waveform VHV of the second battery 205h, and (b) of FIG. 11E illustrates the current iprechg flowing between the second capacitor C and the second battery 205h.

(c) of FIG. 11E illustrates the current iLIkg flowing on the leakage inductor LIkg and the current iLM flowing on the secondary side of the transformer TF, and (d) of FIG. 11E illustrates the drain-source voltages VdsL1 and VdsL2 of the first switching element QL1 and the second switching element QL2, respectively.

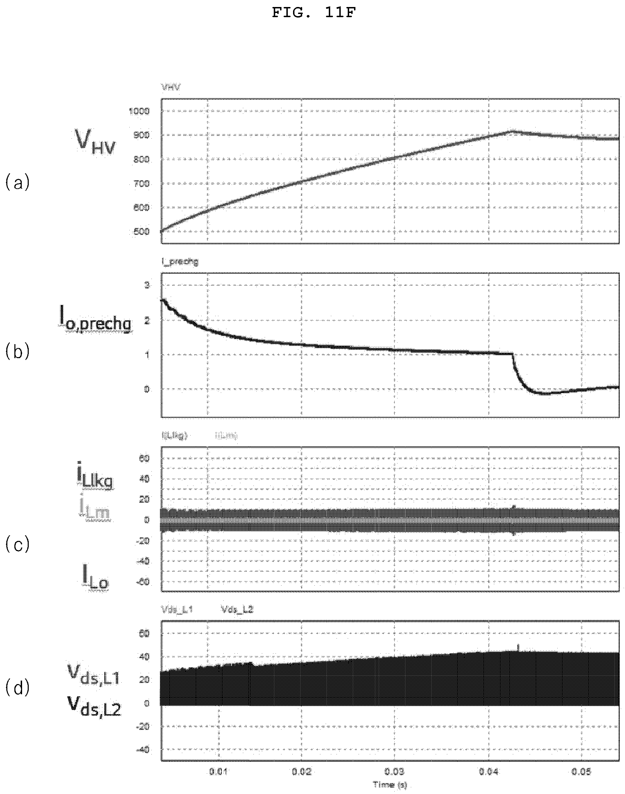

FIG. 11F illustrates an example of a waveform during charging, etc., in a method corresponding to FIG. 10B.

Referring to the drawing, (a) of FIG. 11F illustrates the voltage waveform VHV of the second battery 205h, and (b) of FIG. 11F illustrates the current iprechg flowing between the second capacitor C and the second battery 205h.

(c) of FIG. 11F illustrates the current iLIkg flowing on the leakage inductor LIkg and the current iLM flowing on the secondary side of the transformer TF, and (d) of FIG. 11F illustrates the drain-source voltages VdsL1 and VdsL2 of the first switching element QL1 and the second switching element QL2, respectively.

Comparing (d) of FIG. 11F and (d) of FIG. 11E, in the case of (d) of FIG. 11F, the drain-source voltages VdsL1 and VdsL2 of the first switching element QL1 and the second switching element QL2 can be stable.

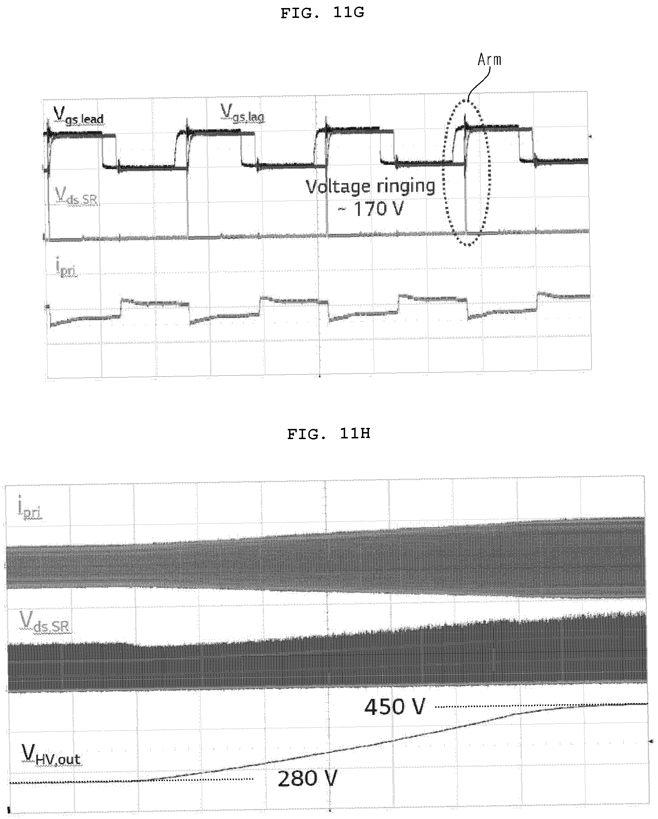

FIG. 11G illustrates another example of the waveform during charging in the method corresponding to FIG. 10A.

Referring to the drawings, FIG. 11G illustrates each of a gate-to-source voltage Vgs and a drain-to-source voltage Vds of each of the switching elements QL1 to QL4, and a current waveform ipri flowing on each of the switching elements QL1 to QL4.

According to FIG. 11G, there is a disadvantage that the ringing voltage is generated in the area Arm.

FIG. 11H illustrates another example of the waveform during charging in the method corresponding to FIG. 10B.

Referring to the drawing, FIG. 11H illustrates each of the current waveform ipri flowing on each of the switching elements QL1 to QL4, the drain-to-source voltage Vds of each of the switching elements QL1 to QL4, and the voltage waveform VHV of the second battery 205h.

Each waveform is stable, and in particular, the voltage waveform VHV of the second battery 205h increases sequentially according to charging.

While the preferred embodiments of the present disclosure have been illustrated and described above, the present disclosure is not limited to the aforementioned specific embodiments, various modifications can be made by a person with ordinary skill in the technical field to which the present disclosure pertains without departing from the subject matters of the present disclosure that are claimed in the claims, and these modifications should not be appreciated individually from the technical spirit or prospect of the present disclosure.

## Claims

1. A power conversion device comprising:
a first capacitor connected to a first battery;
a second capacitor connected to a second battery;
a transformer;
a first full bridge switching portion including a plurality of switching elements, and disposed between the first capacitor and an input side of the transformer; and
a second full bridge switching portion including a plurality of switching elements, and disposed between the second capacitor and an output side of the transformer,
wherein in a pre-charge mode, a turn-off timing of a partial switching element of the second full bridge switching portion is delayed during operations of the first full bridge switching portion and the second full bridge switching portion.

2. The power conversion device of claim 1, wherein in the pre-charge mode, the turn-off timing of the partial switching element of the second full bridge switching portion is delayed, and
wherein a distance between the turn-off timing of the partial switching element of the second full bridge switching portion and a turn-off timing of the other partial switching element is less than a distance between the turn-off timing of the partial switching element of the second full bridge switching portion and a turn-on timing of the other partial switching element.

3. The power conversion device of claim 1, wherein in the pre-charge mode, during a turn-off delay interval in which the turn-off timing of the partial switching element of the second full bridge switching portion is delayed, the other partial switching element of the second full bridge switching portion is turned on, and the switching elements in the first full bridge switching portion are turned on.

4. The power conversion device of claim 3, wherein after the turn-off delay interval, the partial switching element of the second full bridge switching portion is turned off, and
during a turn-off interval in which the partial switching element of the second full bridge switching portion is turned off, the other partial switching element of the second full bridge switching portion is turned on, and the switching elements in the first full bridge switching portion are turned on.

5. The power conversion device of claim 4, wherein after the turn-off interval, during a turn-on delay interval in which the another partial switching element of the second full bridge switching portion is turned on, the other partial switching element of the second full bridge switching portion is turned on, and the switching elements in the first full bridge switching portion are turned on.

6. The power conversion device of claim 5, wherein after the turn-on interval, the another partial switching element of the second full bridge switching portion is maintained to be turned on, the other partial switching element of the second full bridge switching portion is turned off, a partial switching element in the first full bridge switching portion is turned off, and the other partial switching element in the first full bridge switching portion is turned on.

7. The power conversion device of claim 1, further comprising:
a controller configured to control the first full bridge switching portion and the second full bridge switching portion.

8. The power conversion device of claim 7, wherein in the pre-charge mode, during the operations of the first full bridge switching portion and the second full bridge switching portion, the controller is configured to delay the turn-off timing of the partial switching element of the second full bridge switching portion.

9. The power conversion device of claim 7, wherein the controller is configured to decrease the delay as a difference between a first battery voltage and a second battery voltage increases in the pre-charge mode.

10. The power conversion device of claim 7, wherein the controller is configured to decrease the delay in response to increase of a voltage of the second capacitor in the pre-charge mode.

11. The power conversion device of claim 7, further comprising:
an inductor connected between the first capacitor and the first full bridge switching portion; and
a first current detector detecting a current flowing on the inductor,
wherein the controller is configured to decrease the delay in response to decrease of the current flowing on the inductor in the pre-charge mode.

12. The power conversion device of claim 7, further comprising:
a second current detector disposed between the second full bridge switching portion and the second capacitor; and
a third current detector disposed between the second capacitor and the second battery.

13. The power conversion device of claim 7, wherein the controller is configured to flow a current from the first capacitor toward the second capacitor in the pre-charge mode, and
flow the current from the second capacitor toward the first capacitor after termination of the pre-charge mode.

14. The power conversion device of claim 7, further comprising:
a battery switching element connected between the second capacitor and the second battery,
wherein the controller is configured to turn off the battery switching element in the pre-charge mode.

15. The power conversion device of claim 14, wherein the controller is configured to turn on the battery switching element after the pre-charge mode.

16. The power conversion device of claim 7, further comprising:
an inverter connected to both terminals of the second capacitor,
wherein the controller is configured to store a voltage from the second battery in the second capacitor and control the inverter to operate based on the voltage stored in the second capacitor, after the pre-charge mode.

17. The power conversion device of claim 7, further comprising:
a converter configured to convert an input alternating current (AC) voltage into a direct current (DC) voltage,
wherein the second battery is disposed between the converter and the inverter.

18. The power conversion device of claim 1, wherein the first full bridge switching portion includes
a first switching element and a second switching element corresponding to a first leg, which are connected to each other in series; and
a third switching element and a fourth switching element corresponding to a second leg connected in parallel to the first leg, which are connected to each other in series, and
wherein the second full bridge switching portion includes
a fifth switching element and a sixth switching element corresponding to a third leg, which are connected to each other in series; and
a seventh switching element and an eighth switching element corresponding to a fourth leg connected in parallel to the third leg, which are connected to each other in series.

19. The power conversion device of claim 1, wherein the second full bridge switching portion further includes
a first diode element and a second diode element connected in parallel to the third leg and the fourth leg, which are connected to each other in series.

20. A power conversion device comprising:
a first capacitor connected to a first battery;
a second capacitor connected to a second battery;
a transformer;
a first full bridge switching portion including a plurality of switching elements, and disposed between the first capacitor and an input side of the transformer; and
a second full bridge switching portion including a plurality of switching elements, and disposed between the second capacitor and an output side of the transformer,
wherein in a pre-charge mode, a distance between a turn-off timing of a partial switching element of the second full bridge switching portion and a turn-off timing of the other switching element is less than a distance between the turn-off timing of the partial switching element of the second full bridge switching portion and a turn-on timing of the other partial switching element.
